# EUROPEAN PATENT SPECIFICATION

(11) **EP 4 700 621 B1**
(45) Date of publication and mention of the grant of the patent: **30.09.2026**
(21) Application number: 24209557.8
(22) Date of filing: 29.10.2024
(51) Int. Cl.: G06F 21/55, G06F 21/56, H04L 9/40

(54) **RANSOMWARE DETECTION SYSTEM FOR SSD WITH NVME-OF INTERFACE INCLUDING SERVICE CONTINUATION FOR NON-INFECTED HOSTS**
RANSOMWARE-DETEKTIONSSYSTEM FÜR SSD MIT NVME-OF-SCHNITTSTELLE MIT DIENSTFORTSETZUNG FÜR NICHTINFIZIERTE HOSTS
SYSTÈME DE DÉTECTION DE RANÇONGICIEL POUR SSD AVEC INTERFACE NVME-OF COMPRENANT CONTINUATION DE SERVICE POUR DES HÔTES NON INFECTÉS

(30) Priority: 23.08.2024 US 202418813470
(43) Date of publication of application: 25.02.2026
(73) Proprietor: Samsung Electronics Co., Ltd., Suwon-si, Gyeonggi-do 16677 (KR)
(72) Inventor: BERMAN, Amit, 16677 Suwon-si, Gyeonggi-do (KR); BLAICHMAN, Evgeny, 16677 Suwon-si, Gyeonggi-do (KR)
(74) Representative: Kuhnen & Wacker Patent- und Rechtsanwaltsbüro PartG mbB

(56) References cited:
- EP-A1- 4 258 145
- US-A1- 2023 351 013
- US-A1- 2024 037 233

## Description

### BACKGROUND

Ransomware is a type of malware that encodes data targeted for attack and demands money in exchange for an encryption key necessary for decrypting the encrypted data. Ransomware has become a risk factor that causes enormous financial and social losses. Accordingly, there are measures that allow a storage device to cope with the ransomware attack.

EP 4 258 145 A1 discloses a technique of identifying hosts suspected of being sources of ransomware infection including initiating a tracking interval in response to a data storage system detecting a suspected ransomware attack. During the tracking interval, write requests received by the data storage system are analyzed and ransomware attributes for those write requests are generated. The ransomware attributes of the write requests indicate risks of ransomware infection and are associated with hosts from which the respective write requests originate. A particular host is identified as a suspected source of ransomware infection based at least in part on the ransomware attributes associated with that host.

### SUMMARY

Some example embodiments of the inventive concepts described herein relate to a method and an apparatus for early detection of a ransomware attack in a non-volatile memory express (NVMe)-over fabrics (of) storage system and are set out in the appended claims.

### BRIEF DESCRIPTION OF THE FIGURES

The above and other objects and features of the inventive concepts will become apparent by describing in detail some example embodiments thereof with reference to the accompanying drawings.
FIG. 1 is a diagram of a system to which a storage device is applied, according to example embodiments.
FIG. 2 is an example of a NVMe-over-fabrics (NVME-of) storage system according to example embodiments.
FIG. 3 is a block diagram of an NVMe-of RWD according to example embodiments.
FIG. 4 is a flow chart illustrating a method according to example embodiments.
FIG. 5 is a block diagram of a ransomware host instance according to example embodiments.

### DETAILED DESCRIPTION

In the detailed description, components that are described with reference to the terms "driver", "block", "unit", etc. will be implemented with software, hardware, or a combination thereof. For example, the software may be a machine code, firmware, an embedded code, and application software. For example, the hardware may include an electrical circuit, an electronic circuit, a processor, a computer, integrated circuit cores, a pressure sensor, an inertial sensor, a micro electro mechanical system (MEMS), a passive element, or a combination thereof.

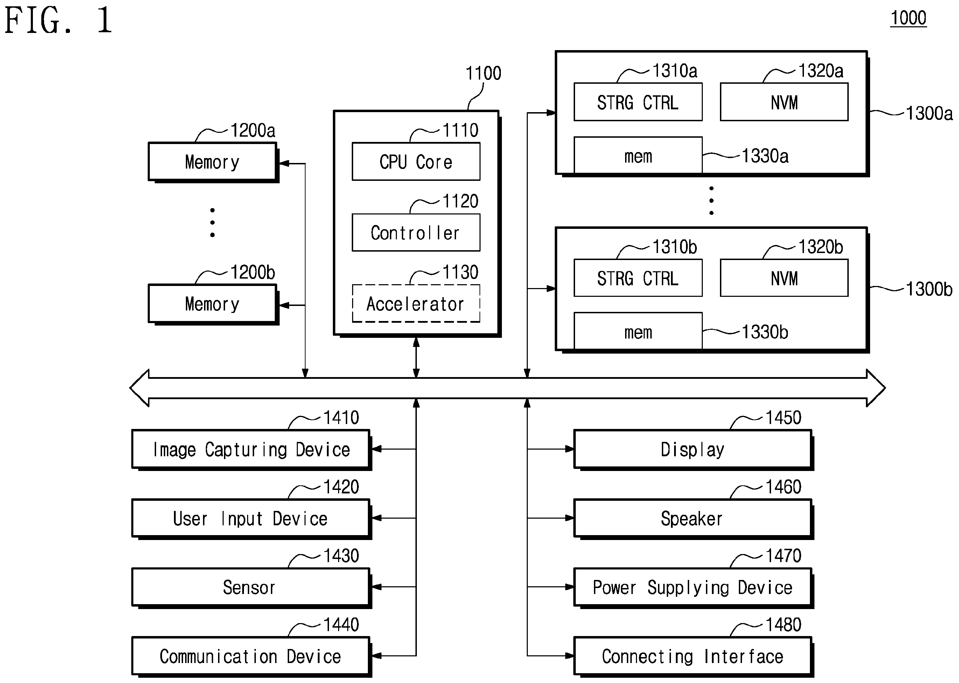

FIG. 1 is a diagram of a system 1000 to which a storage device is applied, according to an embodiment. The system 1000 of FIG. 1 may basically be a mobile system, such as a portable communication terminal (e.g., a mobile phone), a smartphone, a tablet personal computer (PC), a wearable device, a healthcare device, or an Internet of things (IOT) device. However, the system 1000 of FIG. 1 is not necessarily limited to the mobile system and may be a PC, a laptop computer, a server, a media player, or an automotive device (e.g., a navigation device).

Referring to FIG. 1, the system 1000 may include a main processor 1100, memories (e.g., 1200a and 1200b), and storage devices (e.g., 1300a and 1300b). In addition, the system 1000 may include at least one of an image capturing device 1410, a user input device 1420, a sensor 1430, a communication device 1440, a display 1450, a speaker 1460, a power supplying device 1470, and a connecting interface 1480.

The main processor 1100 may control all operations of the system 1000, more specifically, operations of other components included in the system 1000. The main processor 1100 may be implemented as a general-purpose processor, a dedicated processor, or an application processor.

The main processor 1100 may include at least one CPU core 1110 and further include a controller 1120 configured to control the memories 1200a and 1200b and/or the storage devices 1300a and 1300b. In some embodiments, the main processor 1100 may further include an accelerator 1130, which is a dedicated circuit for a high-speed data operation, such as an artificial intelligence (AI) data operation. The accelerator 1130 may include a graphics processing unit (GPU), a neural processing unit (NPU) and/or a data processing unit (DPU) and be implemented as a chip that is physically separate from the other components of the main processor 1100.

The memories 1200a and 1200b may be used as main memory devices of the system 1000. Although each of the memories 1200a and 1200b may include a volatile memory, such as static random access memory (SRAM) and/or dynamic RAM (DRAM), each of the memories 1200a and 1200b may include non-volatile memory, such as a flash memory, phase-change RAM (PRAM) and/or resistive RAM (RRAM). The memories 1200a and 1200b may be implemented in the same package as the main processor 1100.

The storage devices 1300a and 1300b may serve as non-volatile storage devices configured to store data regardless of whether power is supplied thereto, and have larger storage capacity than the memories 1200a and 1200b. The storage devices 1300a and 1300b may respectively include storage controllers (STRG CTRL) 1310a and 1310b and Non-Volatile Memories (NVMs) 1320a and 1320b configured to store data via the control of the storage controllers 1310a and 1310b. Although the NVMs 1320a and 1320b may include flash memories having a two-dimensional (2D) structure or a three-dimensional (3D) V-NAND structure, the NVMs 1320a and 1320b may include other types of NVMs, such as PRAM and/or RRAM.

The storage devices 1300a and 1300b may be physically separated from the main processor 1100 and included in the system 1000 or implemented in the same package as the main processor 1100. In addition, the storage devices 1300a and 1300b may have a nonvolatile memory NVM 1320a and 1320b. The NVM 1320a and/or 1320b may include types of solid-state devices (SSDs) or memory cards and be removably combined with other components of the system 1000 through an interface, such as the connecting interface 1480 that will be described below. The storage devices 1300a and 1300b may additionally include a volatile memory 1330a and/or 1330b. The memory 1330a and/or 1330b may include non-volatile memory, such as a flash memory, phase-change RAM (PRAM) and/or resistive RAM (RRAM). The storage devices 1300a and 1300b may be devices to which a standard protocol, such as a universal flash storage (UFS), an embedded multi-media card (eMMC), or a non-volatile memory express (NVMe), is applied, without being limited thereto.

The image capturing device 1410 may capture still images or moving images. The image capturing device 1410 may include a camera, a camcorder, and/or a webcam.

The user input device 1420 may receive various types of data input by a user of the system 1000 and include a touch pad, a keypad, a keyboard, a mouse, and/or a microphone.

The sensor 1430 may detect various types of physical quantities, which may be obtained from the outside of the system 1000, and convert the detected physical quantities into electric signals. The sensor 1430 may include a temperature sensor, a pressure sensor, an illuminance sensor, a position sensor, an acceleration sensor, a biosensor, and/or a gyroscope sensor.

The communication device 1440 may transmit and receive signals between other devices outside the system 1000 according to various communication protocols. The communication device 1440 may include an antenna, a transceiver, and/or a modem.

The display 1450 and the speaker 1460 may serve as output devices configured to respectively output visual information and auditory information to the user of the system 1000.

The power supplying device 1470 may appropriately convert power supplied from a battery (not shown) embedded in the system 1000 and/or an external power source, and supply the converted power to each of components of the system 1000.

The connecting interface 1480 may provide connection between the system 1000 and an external device, which is connected to the system 1000 and capable of transmitting and receiving data to and from the system 1000. The connecting interface 1480 may be implemented by using various interface schemes, such as advanced technology attachment (ATA), serial ATA (SATA), external SATA (e-SATA), small computer small interface (SCSI), serial attached SCSI (SAS), peripheral component interconnection (PCI), PCI express (PCIe), NVMe, IEEE 1394, a universal serial bus (USB) interface, a secure digital (SD) card interface, a multi-media card (MMC) interface, an eMMC interface, a UFS interface, an embedded UFS (eUFS) interface, and a compact flash (CF) card interface.

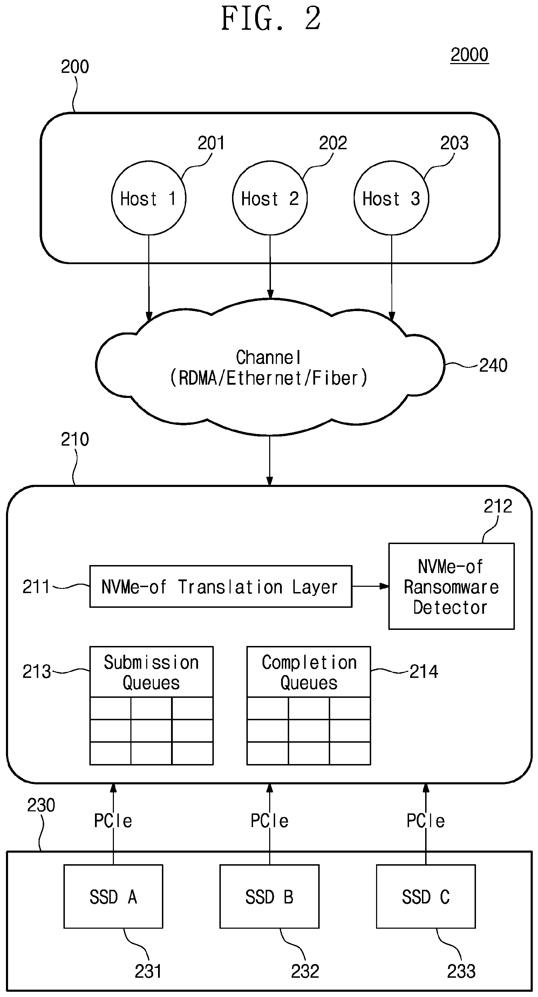

FIG. 2 is an example of a NVMe-over-fabrics (NVME-of) storage system according to example embodiments.

Referring to FIG. 2, a NVMe-of storage system 2000 according to example embodiments includes hosts 200 and a server 210. For example purposes, FIG. 2 shows three hosts 201, 202, and 203. However, example embodiments are not limited thereto and there may be more or fewer hosts. Each of the hosts 200 and the server 210 may be implemented as instances of the system 1000. For example, the hosts 200 may be user devices (e.g., mobile devices, PCs, etc.) and the server 210 may be a server. FIG. 2 includes one server 210. However, example embodiments are not limited thereto and a storage system 2000 according to example embodiments may include more than one server 210.

The hosts 200 may communicate with the server 210 over a channel 240. The channel 240 may be, for example, the Internet. The channel 240 may include, for example, different transport layer technologies such as remote direct memory access (RDMA), ethernet, fibre channel, TCP, etc.

The server 210 may include a NVMe-of translation layer 211, a NVMe-of ransomware detector (RWD) 212, submission queues 213, and/or completion queues 214. The NVMe-of translation layer 211 and/or the NVMe-of ransomware detector 212 may be implemented by processing circuitry. For example, the NVMe-of translation layer 211 and/or the NVMe-of ransomware detector 212 may be implemented by main processor 1100. However, example embodiments are not limited thereto and each of the NVMe-of translation layer 211, the NVMe-of ransomware detector 212, the submission queues 213, and/or the completion queues 214 may be standalone chips such as integrated peripherals. The submission queues 213, and/or the completion queues 214 may be implemented by a memory. For example, memory, 1200a.

The server 210 is connected to a plurality of NVMe devices 230. FIG. 2 shows three NVMe devices 231, 232, and 233. However, example embodiments are not limited thereto and there may be more or fewer NVMe devices. Each of the NVMe devices may be devices to which a standard protocol, such as a universal flash storage (UFS), an embedded multi-media card (eMMC), or a non-volatile memory express (NVMe), is applied, without being limited thereto. For example, each of the NVMe devices 230 may be a solid state drive (SSD). The server 210 may communicate with the NVMe devices 230 using various interface schemes, such as ATA, SATA, e-SATA, SCSI, SAS, PC), PCIe, NVMe, IEEE 1394, USB, etc.

The NVMe-of storage system 2000 enables sharing NVMe based storage across multiple servers/CPUs with nearly local disc performance. In the NVMe-of storage system 2000, the hosts 200 may use the same commands that are used with local NVMe drives. The commands are encapsulated and sent from the hosts 200 via the channel 240 to the server 210. The server 210 decapsulates the commands and sends the commands to the NVMe devices 230.

The NVMe-of storage system 2000 may be used for storage and/or compute disaggregation for improved resource utilization in organizations. The NVMe storage system 2000 may also be used by hyperscalers to offer large storage resources in the form of a cloud platform.

However, because an individual host of the hosts 200 has access to a large number of NVMe devices shared with the other hosts 200, if a single host of the hosts 200 is infected with a ransomware virus there is a possibility that the entire shared storage of all of the hosts 200 may be encrypted and a very large volume of critical data may be lost.

For example, according to the NVMe standard a host 200 can open multiple 'Submission Queues' in the host's memory, and write the required IO commands to be handled by the SSD to those queues. In the NVMe-of storage system 2000, multiple hosts 200 can open 'Submission Queues' (e.g., in the submission queues 213) to a same NVMe 230. Thus, the I/O traffic to a given NVMe 230 is mixed from the various hosts 200.

A method of detecting ransomware malware is to detect a ransomware I/O pattern. For example, read/write commands to a NVMe device may be analyzed for a write-after-read pattern. According to example embodiments, a machine learning model (discussed in more detail below) may be used to detect the ransomware I/O pattern. For example the machine learning algorithm may not use a heuristic, such as write after read, to detect the ransomware I/O pattern. If one of the hosts 200 is infected with a ransomware malware, the infected I/O traffic from the infected host 200 may be mixed with I/O commands from other hosts 200, and the ransomware I/O pattern may be difficult to detect. The NVMe-of RWD 212, according to example embodiments, may detect an infected host 200 by detecting a ransomware I/O pattern from a particular host 200.

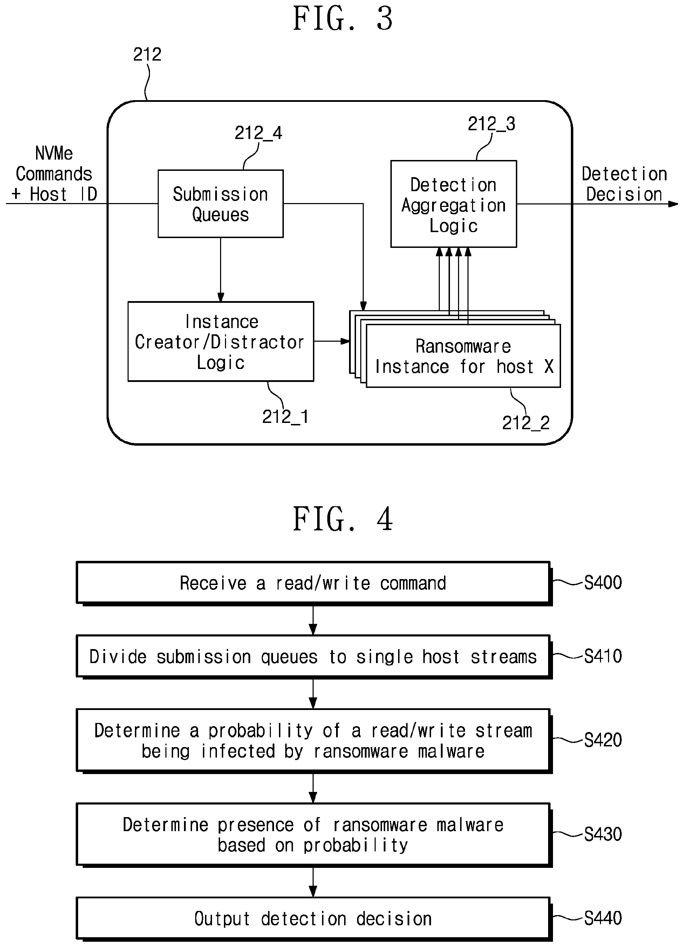

FIG. 3 is a block diagram of an NVMe-of RWD according to example embodiments.

Referring to FIG. 3, the NVMe-of RWD 212 according to example embodiments includes an instance creator 212_1, a plurality of ransomware host instances 212_2 (e.g., a ransomware host detector), a detection aggregation logic 212_3, and/or submission queues 212_4.

FIG. 4 is a flow chart illustrating a method according to example embodiments.

The method of FIG. 4 may be performed by the NVMe-of RWD 212. Referring to FIGS. 3 and 4, at S400 the NVMe-of RWD 212 receives a read/write command (e.g., a plurality of read/write commands) from one or more hosts 200. For example, a host 200 may transmit a read/write command to the server 210 via the channel 240. The NVMe-of translation layer 211 may translate the read/write command and output the translated command to the NVMe-of RWD 212 and may also add the translated command to submission queues 213 for processing. Because the translated command is added to the submission queue 213 for processing at the same time as it is input to the NVMe-of RWD 212 for RWD detection, the detection of ransomware by the NVMe-of RWD 212 may be accomplished without delaying a read/write command from a host 200.

The NVMe-of RWD 212 may place the input read/write commands in the submission queues 212_4. For example, the submission queues 212_4 may be a dynamic list of submission queues of all the active hosts 200 for all of the NVMes 230 in the NVMe-of storage system 2000.

At S410, the NVMe-of RWD 212 divides the dynamic list of submission queues to host-specific read/write streams. For example, according to NVMe-of standard, while multiple hosts 200 can access a same NVMe namespace, each host 200 must use its own unique set of submission queues including a unique submission queue identifier (SQID). The NVMe-of RWD 212 may identify a host ID corresponding to a respective host 200 SQID and divide the dynamic list based on the host IDs.

At S420, the NVMe-of RWD 212 obtains or determines a probability that each host-specific read/write stream is infected by ransomware malware. For example, the NVMe-of RWD 212 may open a new ransomware host instance 212_2 for each host-specific read/write stream. For example, the NVMe-of RWD 212 may open a new ransomware host instance 212_2 for each host-specific read/write stream using the instance creator 212_1. Each ransomware host instance 212_2 may generate and/or output, to the detection aggregation logic 212_3, a probability of the respective host-specific read/write stream is likely infected by ransomware malware. For example, the ransomware host instance 212_2 may generate and/or output the probability as a soft decision (e.g., as a percentage). Alternatively, the ransomware host instance 212_2 may generate and/or output the probability as one of high, medium, or low. The ransomware host instance 212_2 will be described in more detail later.

At S430, the NVMe-of RWD 212 determines or recognizes presence of ransomware malware in a host-specific read/write stream based on the probability. For example, the detection aggregation logic 212_3 may determine presence of ransomware malware if the probability from the ransomware host instance 212_2 is above a threshold probability. For example, the detection aggregation logic 212_3 may determine presence of a ransomware malware if the probability from the ransomware host instance 212_2 indicates a high probability and/or if the ransomware host instance 212_2 indicates a high probability. However, example embodiments are not limited thereto and a more complex decision logic may be used.

Alternatively, according to example embodiments, the detection aggregation logic 212_3 may evaluate the decision from each host-specific read/write stream based on the decisions from other host-specific read/write stream. For example, a situation in which the probability from a single host-specific read/write stream is moderate and the probability from other host-specific read/write streams is low differs from the case where the probability from multiple host-specific read/write stream is moderate. In a case where the probability from multiple host-specific read/write stream is moderate, the detection aggregation logic 212_3 may increase the probability for all of the multiple host-specific read/write streams to high, because some suspicious activity may be present in the entire NVMe-of storage system 2000.

At S440, the NVMe-of RWD 212 generates or outputs a detection decision. For example, if the detection aggregation logic 212_3 determines the presence of ransomware malware in a host-specific read/write stream, the NVMe-of RWD 212 may generate or output an alert or a warning signal to the server 210 that the corresponding host 200 may be infected with ransomware malware. The server 210 may take preventative measures based on the alert or warning signal. For example, the server 210 may suspend access to the server 210 from hosts 200 indicated as being infected with ransomware malware. Additionally or alternatively, the NVMe-of RWD 212 may attempt to recover infected data from the NVMe 230 and/or the NVMe-of RWD 212 may output an alert to the server 210 and/or to the host 200 indicated as being infected with ransomware malware.

Therefore, according to example embodiments, an NVMe-of RWD 212 may more quickly and/or accurately detect an instance of ransomware on one of and/or a plurality of hosts 200 without delaying a read/write command from a host 200. Thus, a very large volume of critical data of a plurality of hosts 200 may be prevented from being lost.

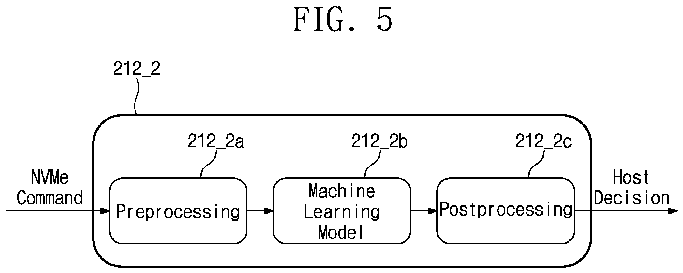

FIG. 5 is a block diagram of a ransomware host instance according to example embodiments.

Referring to FIG. 5, a ransomware host instance 212_2 includes a preprocessing module 212_2a, a machine learning model 212_2b, and/or a postprocessing module 212_2c. The ransomware host instance 212_2 may be instantiated by the NVMe-of RWD 212.

The preprocessing module 212_2a may divide a host-specific read/write stream to chunks and calculate different statistics of the read/write commands for each chunk. For example, the preprocessing module 212_2a may calculate a ratio of write after read commands, a distribution of logical block addresses, a distribution of delays between I/O commands, etc. The calculated statistics, along with the raw data of the host-specific read/write stream are then forwarded to the machine learning model 212_2b.

The machine learning model 212_2b may be a pre-trained machine learning model that has been trained on large volumes of both ransomware and benign applications to classify the ransomware attacks. The machine learning model 212_2b may determine a probability that a chunk is infected by ransomware malware. For example, the machine learning model 212_2b may output the probability as a percent. Alternatively, the machine learning model 212_2b may output the probability as one of high, medium, or low.

Any known machine learning algorithm may be used for training the machine learning model 212_2b. For example, the machine learning model may include at least one of Fully Connected Neural Network, Convolutional Neural Network, Transformer Network, Decision Trees, Random Forest, etc.

The probabilities for each chunk of the host-specific read/write stream are output to the postprocessing module 212_2c. The postprocessing module 212_2c outputs a probability to the detection aggregation logic 212_3 based on the probability of the plurality of chunks of the host-specific read/write stream. For example, the postprocessing module 212_2c may average the probabilities from the machine learning model 212_2b of all chunks of a host-specific read/write stream and output the average to the detection aggregation logic 212_3 as the probability.

Each ransomware host instance 212_2 may require substantial computational and memory resources, while a large number of hosts 200 may operate in the NVMe-of storage system 2000. Therefore, if a host 200 does not transmit any read/write commands for a given amount of time (e.g., above a threshold amount of time) then the NVMe-of RWD 212 may close the ransomware host instance 212_2 corresponding to the host-specific read/write stream of the host 200. For example, the NVMe-of RWD 212 may maintain ransomware host instances 212_2 only of the hosts 200 that operate in parallel in order to optimally use the resources of the NVMe-of storage system 2000. A maximum number of supported parallel instances in the NVME-of storage system 2000 may be set according to specific parameters of a given storage system.

One or more of the elements disclosed above may include or be implemented in one or more processing circuitries such as hardware including logic circuits; a hardware/software combination such as a processor executing software; or a combination thereof. For example, the processing circuitries more specifically may include, but is not limited to, a central processing unit (CPU) , an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

## Claims

1. A storage system (1000, 2000) comprising:
processing circuitry (1100) configured to,
divide submission queues (212_4) received from a plurality of hosts (200) into respective single host streams,
obtain a probability of a single host stream being infected by ransomware, generate a warning signal in response to the probability of the single host stream being infected by ransomware,
instantiate an instance (212_2) of a ransomware detector (212) for each single host stream, and
close an instance (212_2) of a ransomware detector (212) in response to a host (200) corresponding with the instance (212_2) of the ransomware detector (212) not transmitting a read/write command for more than a threshold amount of time.

2. The storage system (1000, 2000) of claim 1, wherein the processing circuitry (1100) is further configured to determine a presence of ransomware in the system (1000, 2000) based on a plurality of probabilities of a plurality of the single host streams.

3. The storage system (1000, 2000) of claim 1, wherein the processing circuitry (1100) is further configured to evaluate the probability of each single host stream based on the probabilities from other single host streams of the plurality of hosts (200).

4. The storage system (1000, 2000) of claim 1, wherein the processing circuitry (1100) is further configured to suspend a host (200) of the plurality of hosts (200) from transmitting read/write commands in response to generating the warning signal.

5. The storage system (1000, 2000) of claim 1, wherein the storage system (1000, 2000) is a non-volatile memory express over-fabrics, NVMe-of, storage system (1000, 2000).

6. The storage system (1000, 2000) of claim 1, wherein the processing circuitry (1100) is configured to divide the submission queues (212_4) based on respective submission queue identifications, SQIDs, corresponding with respective hosts (200) of the plurality of hosts (200).

7. A method of detecting ransomware in a storage system (1000, 2000), the method comprising:
dividing (S410) submission queues (212_4) from a plurality of hosts (200) into respective single host streams;
obtaining (S420) a probability of a single host stream being infected by ransomware; and
generating (S430, S440) a warning signal in response to the probability of the single host stream being infected by ransomware,
instantiating an instance (212_2) of a ransomware detector (212) for each single host stream,
closing an instance (212_2) of a ransomware detector (212) in response to a host (200) corresponding with the instance (212_2) of the ransomware detector (212) not transmitting a read/write command for more than a threshold amount of time.

8. The method of claim 7, further comprising:
determining (S430) a presence of ransomware in the system (1000, 2000) based on a plurality of probabilities of a plurality of the single host streams.

9. The method of claim 7, further comprising:
evaluating the probability of each single host stream based on the probabilities from other single host streams of the plurality of hosts (200).

10. The method of claim 7, further comprising:
suspending a host (200) of the plurality of hosts (200) from transmitting read/write commands in response to generating the warning signal.

11. The method of claim 7, wherein the storage system (1000, 2000) is a non-volatile memory express over-fabrics, NVMe-of, storage system (1000, 2000).

## Patentansprüche

1. Speichersystem (1000, 2000), aufweisend:
eine Verarbeitungsschaltung (1100), die so konfiguriert ist, dass sie
von einer Vielzahl von Hosts (200) empfangene Übermittlungswarteschlangen (212_4) in jeweilige einzelne Host-Streams aufteilt,
eine Wahrscheinlichkeit ermittelt, dass ein einzelner Host-Stream durch eine Ransomware infiziert ist,
als Reaktion auf die Wahrscheinlichkeit, dass der einzelne Host-Stream durch die Ransomware infiziert ist, ein Warnsignal erzeugt,
eine Instanz (212_2) eines Ransomware-Detektors (212) für jeden einzelnen Host-Stream instanziiert und
eine Instanz (212_2) eines Ransomware-Detektors (212) als Reaktion darauf schließt, dass ein Host (200), der mit der Instanz (212_2) des Ransomware-Detektors (212) korrespondiert, für eine länger als einen Schwellwert andauernde Zeitspanne, keinen Lese-/Schreibbefehl überträgt.

2. Speichersystem (1000, 2000) nach Anspruch 1, wobei die Verarbeitungsschaltung (1100) ferner so konfiguriert ist, dass sie ein Vorhandensein von Ransomware in dem System (1000, 2000) basierend auf einer Vielzahl von Wahrscheinlichkeiten von einer Vielzahl der einzelnen Host-Streams bestimmt.

3. Speichersystem (1000, 2000) nach Anspruch 1, wobei die Verarbeitungsschaltung (1100) ferner so konfiguriert ist, dass sie die Wahrscheinlichkeit einen jeden einzelnen Host-Stream basierend auf den Wahrscheinlichkeiten aus anderen einzelnen Host-Streams von der Vielzahl von Hosts (200) auswertet.

4. Speichersystem (1000, 2000) nach Anspruch 1, wobei die Verarbeitungsschaltung (1100) ferner so konfiguriert ist, dass sie verhindert, dass ein Host (200) von der Vielzahl von Hosts (200) Lese-/Schreibbefehle als Reaktion auf die Erzeugung des Warnsignals überträgt.

5. Speichersystem (1000, 2000) nach Anspruch 1, wobei das Speichersystem (1000, 2000) ein Non-Volatile-Memory-Express-Over-Fabrics-, NVMe-of-, Speichersystem (1000, 2000) ist.

6. Speichersystem (1000, 2000) nach Anspruch 1, wobei die Verarbeitungsschaltung (1100) so konfiguriert ist, dass sie die Übermittlungswarteschlangen (212_4) basierend auf jeweiligen Übermittlungswarteschlangen-Identifikationen, SQIDs, aufteilt, die den jeweiligen Hosts (200) von der Vielzahl von Hosts (200) entsprechen.

7. Verfahren zum Erfassen einer Ransomware in einem Speichersystem (1000, 2000), wobei das Verfahren umfasst:
Aufteilen (S410) von Übermittlungswarteschlangen (212_4) von einer Vielzahl von Hosts (200) in jeweilige einzelne Host-Streams;
Ermitteln (S420) einer Wahrscheinlichkeit, dass ein einzelner Host-Stream durch eine Ransomware infiziert ist; und
Erzeugen (S430, S440) eines Warnsignals als Reaktion auf die Wahrscheinlichkeit, dass der einzelne Host-Stream durch die Ransomware infiziert ist,
Instanziieren einer Instanz (212_2) eines Ransomware-Detektors (212) für jeden einzelnen Host-Stream,
Schließen einer Instanz (212_2) eines Ransomware-Detektors (212) als Reaktion darauf, dass ein Host (200), der mit der Instanz (212_2) des Ransomware-Detektors (212) korrespondiert, für eine länger als einen Schwellwert andauernde Zeitspanne, keinen Lese-/Schreibbefehl überträgt.

8. Verfahren nach Anspruch 7, ferner umfassend:
Bestimmen (S430) eines Vorhandenseins von Ransomware in dem System (1000, 2000) basierend auf einer Vielzahl von Wahrscheinlichkeiten von einer Vielzahl der einzelnen Host-Streams.

9. Verfahren nach Anspruch 7, das ferner umfasst:
Auswerten der Wahrscheinlichkeit jedes einzelnen Host-Streams basierend auf den Wahrscheinlichkeiten aus anderen einzelnen Host-Streams von der Vielzahl von Hosts (200).

10. Verfahren nach Anspruch 7, das ferner umfasst:
Verhindern, dass ein Host (200) von der Vielzahl von Hosts (200) Lese-/Schreibbefehle als Reaktion auf die Erzeugung des Warnsignals überträgt.

11. Verfahren nach Anspruch 7, wobei das Speichersystem (1000, 2000) ein Non-Volatile-Memory-Express-Over-Fabrics-, NVMe-of-, Speichersystem (1000, 2000) ist.

## Revendications

1. Un système de stockage (1000, 2000) comprenant :
un circuit de traitement (1100) configuré pour :
diviser les files d'attente de soumission (212_4) reçues d'une pluralité d'hôtes (200) en flux d'hôte unique respectifs,
obtenir une probabilité qu'un flux d'hôte unique soit infecté par un rançongiciel,
générer un signal d'alerte en réponse à la probabilité que le flux d'hôte unique soit infecté par un rançongiciel,
instancier une instance (212_2) d'un détecteur de rançongiciel (212) pour chaque flux provenant d'un hôte unique, et
fermer une instance (212_2) d'un détecteur de rançongiciel (212) en réponse au fait qu'un hôte (200) correspondant à l'instance (212_2) du détecteur de rançongiciel (212) ne transmet pas de commande de lecture/écriture pendant une durée supérieure à un seuil.

2. Le système de stockage (1000, 2000) selon la revendication 1, dans lequel le circuit de traitement (1100) est en outre configuré pour déterminer la présence d'un rançongiciel dans le système (1000, 2000) sur la base d'une pluralité de probabilités associées à une pluralité de flux provenant d'un hôte unique.

3. Le système de stockage (1000, 2000) selon la revendication 1, dans lequel le circuit de traitement (1100) est en outre configuré pour évaluer la probabilité de chaque flux d'hôte unique sur la base des probabilités provenant d'autres flux d'hôte uniques de la pluralité d'hôtes (200).

4. Le système de stockage (1000, 2000) selon la revendication 1, dans lequel le circuit de traitement (1100) est en outre configuré pour empêcher un hôte (200) parmi la pluralité d'hôtes (200) d'émettre des commandes de lecture/écriture en réponse à la génération du signal d'avertissement.

5. Le système de stockage (1000, 2000) selon la revendication 1, dans lequel le système de stockage (1000, 2000) est un système de stockage Non-Volatile Memory Express Over-Fabrics, NVMe-of (1000, 2000).

6. Le système de stockage (1000, 2000) selon la revendication 1, dans lequel le circuit de traitement (1100) est configuré pour diviser les files d'attente de soumission (212_4) en fonction des identifiants de file d'attente de soumission, SQID, respectifs correspondant aux hôtes respectifs (200) de la pluralité d'hôtes (200).

7. Un procédé de détection d'un rançongiciel dans un système de stockage (1000, 2000), le procédé comprenant :
diviser (S410) des files d'attente de soumission (212_4) provenant d'une pluralité d'hôtes (200) en flux respectifs d'un seul hôte ;
obtenir (S420) une probabilité qu'un flux provenant d'un hôte unique soit infecté par un rançongiciel ; et
générer (S430, S440) un signal d'alerte en réponse à la probabilité que le flux provenant d'un hôte unique soit infecté par un rançongiciel,
instancier une instance (212_2) d'un détecteur de rançongiciel (212) pour chaque flux provenant d'un hôte unique,
fermer une instance (212_2) d'un détecteur de rançongiciel (212) en réponse au fait qu'un hôte (200) correspondant à l'instance (212_2) du détecteur de rançongiciel (212) ne transmet pas de commande de lecture/écriture pendant une durée supérieure à un seuil.

8. Le procédé selon la revendication 7, comprenant en outre :
déterminer (S430) la présence d'un rançongiciel dans le système (1000, 2000) sur la base d'une pluralité de probabilités associées à une pluralité de flux provenant d'hôtes uniques.

9. Le procédé selon la revendication 7, comprenant en outre :
évaluer la probabilité de chaque flux d'hôte unique sur la base des probabilités provenant d'autres flux d'hôte uniques de la pluralité d'hôtes (200).

10. Le procédé selon la revendication 7, comprenant en outre :
suspendre un hôte (200) parmi la pluralité d'hôtes (200) quant à la transmission de commandes de lecture/écriture en réponse à la génération du signal d'avertissement.

11. Le procédé selon la revendication 7, dans lequel le système de stockage (1000, 2000) est un système de stockage Non-Volatile Memory Express Over-Fabrics, NVMe-of (1000, 2000).
